# EUROPEAN PATENT APPLICATION

(11) **EP 1 808 215 A1**
(43) Date of publication of application: **18.07.2007**
(21) Application number: 07250054.9
(22) Date of filing: 08.01.2007
(51) Int. Cl.: B01D 21/00

(54) **Method and apparatus of sludge treatment**

(30) Priority: 11.01.2006 GB 0600487
(71) Applicant: Earth Tech Engineering Limited, South Yorkshire S75 3DL (GB)
(72) Inventor: Patchett, Gareth, Morley Yorkshire LS27 9AF (GB)
(74) Representative: Chettle, Adrian John

(57) **Abstract**

Apparatus for removing sludge from the base of a settling rank (10) is adapted to maintain solids concentration within a pre-determined range. A peristaltic pump (17) removes sludge from the tank outlet, and the recovery rate of the flexible pump conduit (18) is used to indicate solids concentration.

## Description

This invention relates to sludge treatment, and is particularly concerned with concentration of precipitates which are produced in a process for making potable water.

Raw water feedstock must be treated to make potable water of a consistent quality. Typically a degree of discoloration and turbidity is present in the feedstock, which is removed by dosing with aluminium sulphate. A precipitate of aluminium hydroxide is formed, which becomes a side-stream of very dilute sludge. In order to recover the maximum volume of water and to facilitate sludge disposal this side-stream must undergo further treatment.

One method of dealing with the dilute sludge feedstock, typically at a solids concentration of 0.05%, is to pump it to a flocculation tank where re-flocculation is promoted by the addition of an anionic polyelectrolyte. The flocculated feedstock is then allowed to settle so that the aluminium hydroxide accumulates as a sludge. Faster processing can be achieved by passing the flocculated feedstock upwards through a lamella plate array in which closely adjacent plates at about 55° to the horizontal provide settling surfaces with a rather small settling distance. Flocs tend to settle and accumulate on the upper plate surfaces, and agglomerations form sludge-like deposits which slide down the plates under gravity. Using either method, clarified water exits the tank from the top via a launder.

The sludge accumulates in the liquid filled tank under the array, as semi-solid in the range 2-6% solids concentration. It is important to maintain a depth of such sludge at about 1 m, and this ensures a degree of concentration and compression at the base. A helical scraper is generally rotated at the base of the container to remove thickened sludge through a central outlet.

The rate of sludge accumulation is variable, and dependent on the changing quality of feedstock. A particular difficulty with sludge removal is to ensure that sludge depth remains at or about 1 m. If the level falls too low, efficient compression of sludge does not occur and the effluent has a low solids concentration of the order of 2%. If in contrast the sludge level rises too high, it may prevent agglomerations falling from the lamella plates, and/or result in contaminated clarified water passing over the exit launders.

It has been proposed to suspend sludge thickness detectors in the sludge layer in order to provide a measure of process control, but such detectors are unreliable.

What is required is an apparatus and method of sludge depth control, which is automatic, and which overcomes the problem of maintaining the desired sludge depth.

According to a first aspect of the invention there is provided apparatus for removing sludge from an outlet at the base of a settling tank, the sludge having an increasing solids content from top to bottom, the apparatus comprising a peristaltic pump at the outlet, sensing means representative of the recovery rate of the flexible conduit of said pump, timing means to initiate said pump periodically and control means to cease operation of said pump when said sensing means indicate a recovery rate above a pre-defined limit.

The invention relies upon the realisation that the recovery rate of the flexible conduit is an indirect indication of the thickness of the sludge being pumped. This recovery rate can be reliably determined by for example a displacement transducer. A preferred means of indicating recovery rate is however to measure the output flow rate, by for example an electromagnetic flow meter on the discharge side.

Preferably the pre-defined limit is in the range 2.5-4% solids content. In a preferred embodiment the pump is a variable speed pump.

The timing means may also be adapted to stop said pump at a predetermined interval after initiation, and said control means may be further adapted to prolong pumping when the sensing means indicates a recovery rate below a pre-defined limit.

According to a second aspect of the invention there is provided a method of removing sludge from an outlet at the base of a settling tank, the method comprising the steps of:
drawing sludge from the outlet with a peristaltic pump; sensing the recovery rate of the flexible inlet conduit of said pump;
and ceasing operation of said pump when the recovery rate exceeds a pre-defined limit.

In a preferred embodiment, the recovery rate is sensed indirectly by measuring the flow rate at the outlet side of the pump.

The method may include the alternative step of ceasing operation of said pump after a predetermined time limit, and further include the step of prolonging operation of said pump when the recovery rate fails to reach said pre-defined limit at the predetermined time limit.

Other features of the invention will be apparent from the following description of a preferred embodiment illustrated by way of example only in the accompanying drawings, in which:-
Fig. 1 is a schematic description of an apparatus according to the present invention.
Fig. 2 is a graphical representation of sludge density in a settling tank.

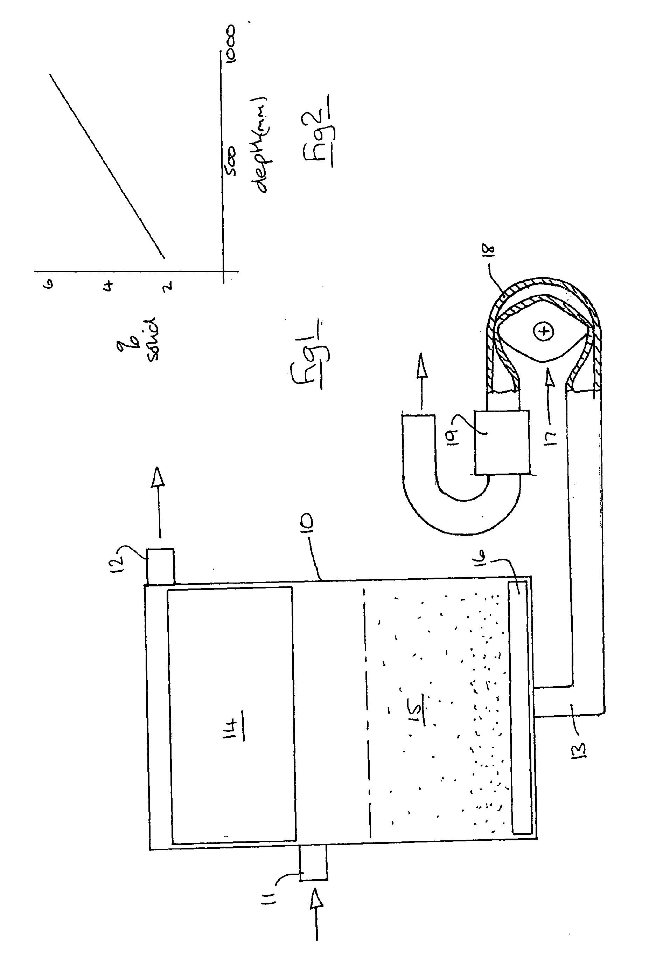

With reference to Fig. 1, a settling/thickening tank 10 has an inlet 11 for water feedstock, an outlet 12 for clarified water, and a central outlet 13 for sludge. A lamella plate array 14 has multiple angled surfaces for precipitate which agglomerates and falls under gravity to form a sludge layer 15 having an approximate depth of 1 m. Sludge concentration increases with depth from a minimum of about 2% solids at the base of the array 14, to a desired maximum of about 6% solids.

In the base of the tank 10 is a helical scraper 16 which is rotatable on demand to drive the lowermost sludge deposits to the central outlet 13. Typically the scraper 16 is allowed to rotate continuously.

Downstream of the outlet 13, a double lobe peristaltic pump 17 is operable to intermittently squeeze a flexible tube portion 18 to pump sludge on demand from the outlet 13 to a subsequent process stage. That subsequent stage is, for example, a plate press, which removes water to give a cake of up to 40% solids.

A flow meter 19 measures flow rate downstream of the pump 17.

The dimensions of the illustrated tank 10, array 14, and scraper 16 are entirely schematic and unrepresentative of actual sizes which will be determined by the desired process scale. Likewise the double lobe pump is for illustration purposes, the kind and size of pump being determined according to a specific installation. What is important is that the upper level 20 of sludge is about 1 m above the base.

A peristaltic pump is generally regarded as a positive displacement pump, thus producing a fixed output per revolution. However if the flexible tube has insufficient time to recover on the inlet side, the volume of material available to pump is reduced because the tube has not returned to maximum cross-sectional area. This feature is generally considered disadvantageous in peristaltic pumps, and if discovered, may lead to specification of a tube with a higher recovery rate, or a restriction of pump speed.

In the present invention the solids content of the sludge layer 15 is generally proportional to depth, as indicated in Fig. 2. Accordingly if sludge is removed at a faster rate than precipitation occurs, the solids content of the outflow will fall and the outflow will be progressively less viscous. A consequence is that the recovery rate of the flexible tube will improve, and the outflow rate will increase to the maximum potential. In contrast too slow a removal rate will result in more viscous outflow, a lower recovery rate, and a lower flow rate.

Flow rate measured at meter 19 is thus an indirect indicator of the solids content of the sludge passing through the peristaltic pump, and can be used to start and stop the pump on demand to keep flow rate within specified limits. The pump may thus run for a few minutes per hour, maintaining the solids concentration at a maximum of 6% at the base of the tank 10.

Typically the pump may be pre-set to start periodically, and the outflow rate determined. If the flow rate is higher than the pre-set maximum, the pump is immediately stopped. If lower than the pre-set maximum, the pump is allowed to run until the high solids layer has cleared (typically beyond a predetermined time limit), and the flow rate reaches the pre-set maximum.

A variable speed pump may be provided for setting purposes, so as to ensure that the recovery rate of the flexible tube is in a range which will differentiate a high solids concentration. The variable speed feature is not used in normal operation, but can be used to re-set process parameters on demand.

A typical lamella thickener has the following dimensions and process parameters:

| | |
|---|---|
| Overall height | 5.5 m |
| Lamella plate pack height | 1.5 m |
| Thickener tank height | 2.0 m |
| Thickener tank diameter | 3.2 m |
| Total volume (including flocculation Tank) | 39 m³ |
| Normal inflow | 65 m³/h |
| Normal sludge production rate | 0.8 m³/h (at 4% solids) |
| Sludge outlet pipe diameter | 100 mm (reducing to 80 mm) |

The construction material for the tanks, the internals and all associated pipework is stainless steel grade 304L.

A suitable peristaltic pump (PCM Pumps model DL45) has the following specification:

| | |
|---|---|
| Tube material | Natural Rubber |
| Tube internal diameter | 45 mm |
| Pump speed range | 3 to 31 rpm |
| Pump output range | 0.33 to 3.3 m³/h |
| Pump inlet and outlet diameter | 40 mm |

## Claims

1. Apparatus for removing sludge from an outlet (13) at the base of a settling tank (10), the sludge having in use an increasing solids content from top to bottom, the apparatus comprising a peristaltic pump (17) at the outlet, sensing means (19) representative of the recovery rate of the flexible conduit (18) of said pump, timing means adapted to initiate periodic operation of said pump, and control means adapted to cease operation of said pump at or above a pre-determined recovery rate of said conduit.

2. Apparatus according to claim 1 wherein said sensing means comprises a flow meter (19) at the outlet of said pump (17).

3. Apparatus according to claim 1 or claim 2 wherein said pump speed is selectable within a range.

4. Apparatus according to any preceding claim and adapted to maintain sludge solids concentration at the outlet of said pump (17) at not greater than 7%.

5. Apparatus according to claim 4 and adapted to maintain sludge solids concentration in the range 2.5 - 4%.

6. Apparatus according to any preceding claim wherein the flexible conduit of said pump has an internal diameter of 45mm.

7. A method of removing sludge from an outlet at the base of a settling tank, the method comprising the steps of
periodically drawing sludge from said outlet with a peristaltic pump;
sensing the recovery rate of the flexible conduit of said pump; and
ceasing operation of said pump at or above a pre-determined recovery rate.

8. A method according to claim 7 and further including the step of sensing said recovery rate by measuring the flow rate at the outlet of said pump.

9. A method according to claim 7 or claim 8 and further including the intermediate step of running said pump for a pre-determined minimum period.

10. A method according to any preceding claim and including the step of setting pump speed to obtain a recovery rate adapted to differentiate solids concentrations at 2% and 6%
